# EUROPÄISCHE PATENTANMELDUNG

(11) **EP 2 650 852 A1**
(43) Veröffentlichungstag der Anmeldung: **16.10.2013**
(21) Anmeldenummer: 12196234.4
(22) Anmeldetag: 10.12.2012
(51) Int. Cl.: G08B 17/107, G01N 21/53, G01N 21/47

(54) **Optische Empfangseinheit, insbesondere für einen nach dem Streulichtprinzip arbeitenden optischen Rauchmelder**

(71) Anmelder: Siemens Aktiengesellschaft, 80333 München (DE)
(72) Erfinder: Fischer, Martin, 8180 Bülach (CH)

(57) **Zusammenfassung**

Die Erfindung betrifft eine optische Empfangseinheit (10), insbesondere für einen nach dem Streulichtprinzip arbeitenden optischen Rauchmelder (100, 200). Sie weist einen Schaltungsträger (12) mit einer Bestückungsseite (L1) und einer gegenüberliegenden Schaltungsträgerseite (L2) auf. Der Schaltungsträger umfasst eine zumindest nahezu vollständig metallisierte Abschirmlage (17). Weiterhin weist die Empfangseinheit einen auf der Bestückungsseite angeordneten Photosensor (11) sowie einen Verstärker (14) zum Verstärken eines vom Photosensor ausgegebenen Sensorsignals und gegebenenfalls weitere Bauelemente auf. Die optische Empfangseinheit umfasst zudem eine Abschirmeinrichtung (13), welche die Bestückungsseite des Schaltungsträgers mit den Bauelementen gegen elektromagnetische Einstrahlung einschliesst. Schliesslich weist die optische Empfangseinheit elektrische Anschlüsse (15) für die Stromversorgung der Empfangseinheit sowie zur Ausgabe eines mit dem verstärkten Sensorsignal korrespondierenden Ausgangssignals auf. Erfindungsgemäss ist im Schaltungsträger eine Durchgangsöffnung (OF) für zu detektierendes Licht vorhanden. Der Photosensor ist derart auf der Bestückungsseite angeordnet, dass dessen photosensitive Schicht (16) auf das zu detektierende Licht ausgerichtet ist.

## Beschreibung

Die Erfindung betrifft eine optische Empfangseinheit, insbesondere für einen nach dem Streulichtprinzip arbeitenden optischen Rauchmelder. Die optische Empfangseinheit weist einen Schaltungsträger mit einer Bestückungsseite und mit einer gegenüberliegenden Schaltungsträgerseite auf. Der Schaltungsträger weist eine nahezu vollständige Abschirmlage. Weiterhin weist die Empfangseinheit einen auf der Bestückungsseite angeordneten Photosensor sowie einen Verstärker zum Verstärken eines vom Photosensor ausgegebenen Sensorsignals und gegebenenfalls weitere Bauelemente auf. Die optische Empfangseinheit umfasst zudem eine Abschirmeinrichtung, welche die Bestückungsseite des Schaltungsträgers mit den Bauelementen gegen elektromagnetische Einstrahlung einschliesst. Schliesslich weist die optische Empfangseinheit elektrische Anschlüsse für die Stromversorgung der Empfangseinheit sowie zur Ausgabe eines mit dem (verstärkten) Sensorsignal korrespondierenden Ausgangssignals auf.

Weiterhin betrifft die Erfindung einen nach dem Streulichtprinzip arbeitenden optischen Rauchmelder, welcher ein Gehäuse, eine Messkammer, zumindest eine Lichtquelle und eine derartige optische Empfangseinheit aufweist.

Aus dem Stand der Technik sind optische Empfangseinheiten bekannt, welche einen Schaltungsträger mit einer darauf angeordneten Photodiode und einen Verstärker zum Verstärken eines von der Photodiode ausgegebenen Sensorsignals aufweist. Der Schaltungsträger ist auf einer Seite mit einem haubenförmigen Abschirmblech zum Schutz gegen EMV-Einstrahlung umgeben. Zudem weist er eine elektrisch leitende Abschirmlage aus Metall auf. Im Abschirmblech ist eine kreisförmige Öffnung vorhanden, so dass zu detektierendes Licht durch die Öffnung hindurch auf die Photodiode gelangen kann.

Nachteilig sind hier zum einen der hohe Montageaufwand und die aufwändige Ausrichtung der Photodiode in Bezug auf die Öffnung im Abschirmblech. Zum anderen kann sich bei einer Temperaturänderung und einer damit einhergehenden thermischen Verformung des Abschirmblechs zusätzlich der Abstand zwischen der Öffnung im Abschirmblech und der Photodiode ändern. Das Sensorsignal ist folglich nachteilig temperaturabhängig.

Es ist somit eine Aufgabe der Erfindung, eine verbesserte optische Empfangseinheit anzugeben.

Die Aufgabe der Erfindung wird durch die Gegenstände der unabhängigen Ansprüche gelöst. Vorteilhafte Ausführungsformen der Erfindung sind in den abhängigen Ansprüchen angegeben.

Erfindungsgemäss ist im Schaltungsträger eine Durchgangsöffnung für zu detektierendes Licht, insbesondere von zu detektierendem Streulicht, vorhanden. Die Durchgangsöffnung erstreckt sich dabei von der Schaltungsträgerseite zur Bestückungsseite. Der Photosensor ist derart auf der Bestückungsseite angeordnet, dass dessen photosensitive Schicht auf das zu detektierende Licht ausgerichtet ist.

Vorzugsweise sind die Abschirmlage und die Abschirmeinrichtung elektrisch leitend miteinander verbunden. Sie bilden somit einen Faradayschen Käfig, welcher den Schaltungsträger inklusive der Bauelemente weitgehend "EMV-dicht" umschliesst.

Die Kernidee der vorliegenden Erfindung liegt in der Umkehrung der Blickrichtung des auf EMV-Einstrahlung höchstempfindliche Photosensors. Der Photosensor "blickt" nun nicht mehr durch die "temperaturabhängige" Öffnung im Abschirmblech hindurch sondern durch die angrenzende stabile Durchgangsöffnung im Schaltungsträger, wobei der Schaltungsträger zugleich eine Abschirmeinrichtung im Sinne des Abschirmblechs ist.

Durch die fertigungstechnisch realisierbare genaue Anordnung des Photosensors sowie der Durchgangsöffnung auf dem Schaltungsträger ist vorteilhaft eine genaue und zudem temperaturstabile Ausrichtung zueinander möglich. Der Fertigungs- und Montageaufwand reduziert sich erheblich. Die Qualität des vom Photosensor ausgegebenen Sensorsignals sowie die des dazu korrespondierenden Ausgangssignals sind somit deutlich höher.

Der Schaltungsträger ist vorzugsweise eine Leiterplatte bzw. eine Platine. Insbesondere ist er eine Mehrlagenleiterplatte, wobei zumindest eine der Lagen die Abschirmlage ist. Die Abschirmlage ist üblicherweise eine Kupfer-Abschirmlage und folglich elektrisch leitend. Sie ist vorzugsweise eine Innenlage des Schaltungsträgers. Mit anderen Worten befindet sich die Abschirmlage nicht auf der Bestückungsseite und auch nicht auf der gegenüberliegenden Schaltungsträgerseite. Weiterhin ist die Abschirmlage vorzugsweise über die gesamte Fläche des Schaltungsträgers bis auf die Durchgangsöffnung vollständig aus Metall.

Die Bestückungsseite ist typischerweise zur Aufnahme der Bauelemente vorgesehen. Sie ist insbesondere zur direkten Montage von sogenannten SMD-Bauelementen vorgesehen. Mit SMD (für Surface-Mounted Device) ist ein Bauteil bezeichnet, welches für die direkte Oberflächenmontage auf einem Schaltungsträger ausgebildet ist. Die gegenüberliegende Schaltungsträgerseite ist typischerweise zum Verschalten der Bauelemente untereinander vorgesehen. Es können auch Bauelemente auf der Schaltungsträgerseite angeordnet sein, wie z.B. SMD-Widerstände oder SMD-Blockkondensatoren. Da prinzipiell über Bauelemente, die auf der Schaltungsträgerseite angeordnet sind, eine EMV-Einstrahlung zu Bauelementen auf der Bestückungsseite nachteilig erfolgen kann, ist es jedoch ratsam, dass diese Schaltungsträgerseite frei von Bauelementen bleibt.

Der Photosensor, wie z.B. eine Photodiode oder ein Phototransistor, "blickt" sozusagen durch den Schaltungsträger hindurch in den Streubereich. Er kann auch einen geringen Abstand vor der Durchgangsöffnung, wie z.B. in einem Bereich bis 3 mm, angeordnet sein. Der Photosensor kann auch zumindest teilweise in die Durchgangsöffnung hineinragen, wie z.B. zur Hälfte.

Der Verstärker ist möglichst in unmittelbarer Nähe zum Photosensor angeordnet, so dass das vom Photosensor ausgegebene Sensorsignal ohne weitere Signalbeeinflussung, insbesondere durch EMV-Einstrahlung, verstärkt werden kann, wie z.B. um mehrere Grössenordnungen wie um einen Faktor 100 oder 1000.

Das verstärkte Sensorsignal kann ein analoges Strom- oder Spannungssignal sein, welches dann als Ausgangssignal bereit gestellt wird. Es kann z.B. proportional zu einem durch den Photosensor hindurchgehenden Photostrom sein. Es kann auf dem Schaltungsträger zudem ein A/D-Umsetzer vorhanden sein, welcher das verstärkte Sensorsignal in ein Digitalsignal umsetzt. Das Digitalsignal kann z.B. ein serielles Datensignal oder ein pulsweitenmoduliertes Signal sein. Der A/D-Umsetzer kann auch Teil des Verstärkers selbst sein. Der Vorteil ist hier die geringe Störempfindlichkeit des als Digitalsignal ausgegebenen Ausgangssignals sowie die mögliche Weiterverarbeitung auf bereits digitaler Ebene.

Nach einer bevorzugten Ausführungsform weist die Innenseite der Durchgangsöffnung eine elektrisch leitende Schicht auf. Insbesondere ist sie metallisiert. Die elektrisch leitende Schicht, d.h. die besonders niederohmige Schicht, ist vorzugsweise mit der Abschirmlage elektrisch leitend verbunden, die ihrerseits vorzugsweise mit der Abschirmeinrichtung elektrisch leitend verbunden ist. Die Abschirmeinrichtung ist typischerweise über eine Vielzahl verteilt angeordneter Durchkontaktierungen mit der Abschirm- bzw. Kupferlage kontaktiert.

Typischweise liegt der vom Photosensor als Sensorsignal ausgegebene Strom im Pikoampere-Bereich. Folglich ist der Photosensor durch elektromagnetische Einwirkung von aussen äusserst anfällig. Dadurch wird die EMV-Abschirmung des Photosensors, des Verstärkers sowie der gegebenenfalls weiteren Bauelemente nochmals gesteigert. So konnte in einem Labortest im Rahmen der EMV-Prüfung zur Europäischen Norm EN 54-7 und EN 54-20 faktisch keine EMV-Empfindlichkeit der erfindungsgemässen optischen Empfangseinheit und insbesondere des Photosensors mehr festgestellt werden, dies auch bei sehr hohen elektrischen Feldstärkewerten.

Einer weiteren Ausführungsform nach ist der Querschnitt der Durchgangsöffnung in Form und Abmessung auf den Querschnitt der photosensitiven Schicht abgestimmt. Typischerweise ist der Querschnitt der Durchgangsöffnung und auch der photosensitiven Schicht kreisförmig. Er kann alternativ auch quadratisch oder hexagonal sein. Die Durchgangsöffnung kann z.B. mittels einer Bohrung in den Schaltungsträger eingebracht sein. Vorzugsweise beträgt der Durchmesser der Durchgangsöffnung in einem Bereich von wenigen Millimetern, wie z.B. in einem Bereich von 2 bis 5 mm.

Insbesondere ist die Durchgangsöffnung zugleich eine optische Blende. Sie dient insbesondere zur Verringerung von Streulicht innerhalb des optischen Streulichtsystems.

Nach einer Ausführungsform weist der Photosensor ein Flip-Chip-Gehäuse auf. Bei einer Flip-Chip-Montage (englisch "to flip", umdrehen) wird der "Chip", d.h. das Halbleiterbauelement, direkt und ohne weitere Anschlussdrähte mit seinen Kontaktierungsflächen "nach unten" zum Schaltungsträger hin montiert. Dadurch werden die elektrischen Verbindungswege zwischen dem Chip und dem Schaltungsträger minimiert.

Besonders vorteilhaft ist es, wenn der Photosensor ein Reverse-Gullwing-Gehäuse für eine direkte Oberflächenmontage auf dem Schaltungsträger aufweist. Die "Reverse-Gullwing"-Montage erlaubt hierbei, dass sich die photosensitive Schicht des Photosensors nach der SMD-Montage möglichst nahe am Schaltungsträger bzw. hier möglichst nahe an der Durchgangsöffnung befindet.

Einer weiteren Ausführungsform sind der Photosensor und der Verstärker als eine Baueinheit ausgebildet. Insbesondere bilden diese dann ein gemeinsames Halbleiterbauelement.

Nach einer bevorzugten Ausführungsform ist die Abschirmeinrichtung als Halbschale zum elektrisch kontaktierenden Aufschnappen auf entsprechende Gegenkontakte auf der Bestückungsseite des Schaltungsträgers ausgebildet. Die Gegenkontakte können als Kontaktrahmen ausgebildet sein, wie z.B. rechteckig oder quadratisch. Der Kontaktrahmen kann dann im Rahmen des Lötvorgangs bei der Fertigung der erfindungsgemässen optischen Empfangseinheit mit dem Schaltungsträger verlötet werden. Der Schaltungsträger ist vorzugsweise im Anschlussbereich des Kontaktrahmens über Durchkontaktierungen elektrisch mit der Abschirmlage kontaktiert. Die Halbschale und der Kontaktrahmen sind typischerweise aus einem Metallblech hergestellt. Nach Aufschnappen der Halbschale auf die Gegenkontakte sind sämtliche Bauelemente und Verschaltungen auf der Bestückungsseite vollständig im Sinne eines Faradayschen Käfigs umschlossen.

Alternativ kann die Halbschale als Ganzes mit Kontaktierungsflächen auf der Bestückungsseite "EMV-dicht" verlötet werden.

Nach einer bevorzugten Ausführungsform sind die elektrischen Anschlüsse als Kontaktierungsflächen auf der Schaltungsträgerseite ausgebildet. Dadurch ist ein externer elektrischer Anschluss der optischen Empfangseinheit auf einfache Weise möglich. Dies kann z.B. durch Anlöten von Anschlussleitungen erfolgen. Derartige Kontaktierungsflächen werden auch als Lötpads bezeichnet

Besonders vorteilhaft ist es, wenn die gesamte erfindungsgemässe optische Empfangseinheit in eine Halterung oder Aufnahmerahmen eingeschoben wird, in welcher eine entsprechende Anzahl von Kontaktstiften angeordnet ist. Vorzugsweise liegen dann die Kontaktstifte nach dem Einschieben der optischen Empfangseinheit seitlich an den Kontaktierungsflächen bzw. den Lötpads an. Die Kontaktstifte können im Anschluss auf einfache Weise mit den Lötpads verlötet werden. Die Kontaktstifte können z.B. mit einem weiteren Schaltungsträger für die Signalauswertung verbunden sein, wie z.B. mit einem weiteren Schaltungsträgers eines Rauchmelders.

Einer weiteren Ausführungsform nach weist der Schaltungsträger zwei seitliche, sich gegenüberliegende Aussenränder auf. Es ist (nur) an einem der beiden Aussenränder ein Federelement zur möglichen Aufbringung einer seitlich wirkenden Federkraft vorhanden.

Dadurch ist nach dem Einschieben der erfindungsgemässen optischen Empfangseinheit in eine Halterung oder einen Aufnahmerahmen durch die seitlich wirkende Federkraft eine automatische Ausrichtung der Empfangseinheit in Richtung zum gegenüberliegenden Innenrand der Halterung oder des Aufnahmerahmens möglich. Die Halterung oder der Aufnahmerahmen können z.B. Teil eines Gehäuses sein, wie z.B. eines optischen Rauchmelders. Hierzu sind die Innenabmessungen der Halterung bzw. des Aufnahmerahmens in der Art auf die Aussenabmessung des Schaltungsträgers der optischen Empfangseinheit bzw. der optischen Empfangseinheit das Federelement zumindest teilweise vorgespannt wird.

Nach einer bevorzugten Ausführungsform ist das Federelement als Teil des Schaltungsträgers selbst ausgebildet. Dadurch reduziert sich der Montageaufwand für ein separates Federelement. Im einfachsten Fall wird im Schaltungsträger mittels einer Fräsung ein seitlicher Federschenkel freigelegt.

Die Aufgabe der Erfindung wird weiterhin durch einen nach dem Streulichtprinzip arbeitenden optischen Rauchmelder gelöst, der ein Gehäuse, eine Messkammer, zumindest eine Lichtquelle und eine erfindungsgemässe optische Empfangseinheit aufweist.

Alternativ kann der optische Rauchmelder auch ein Extinktionsrauchmelder sein, bei welchem die optische Empfangseinheit und die zumindest Lichtquelle derart gegenüberliegend angeordnet sind, dass ihre optische Achsen miteinander fluchten.

Nach einer Ausführungsform sind die optische Achse der erfindungsgemässen optischen Empfangseinheit und die optische Achse der zumindest einen Lichtquelle auf ein gemeinsames optisches Streuzentrum in der Messkammer ausgerichtet. Es ist optische Achse der Empfangseinheit jeweils um einen Streuwinkel zur jeweiligen optischen Achse der zumindest einen Lichtquelle gedreht angeordnet. Der Streuwinkel ergibt sich somit aus der Lage der optischen Achse der jeweiligen Lichtquelle und der optischen Achse bzw. der Empfangsachse der optischen Empfangseinheit.

Der Streulichtrauchmelder kann im Falle nur einer einzigen Lichtquelle eine Streulichtanordnung mit einem Rückwärtsstreuwinkel in einem Bereich zwischen 35° bis 70° aufweisen. Er kann alternativ eine Streulichtanordnung mit einem Vorwärtsstreuwinkel in einem Bereich zwischen 110° und 145° aufweisen. Im Falle von zwei Lichtquellen kann der Streulichtrauchmelder zwei Streulichtanordnungen mit zwei Vorwärtsstreuwinkeln, mit zwei Rückwärtsstreuwinkeln oder mit einem Vorwärts- und einem Rückwärtsstreuwinkel aufweisen.

Nach einer Ausführungsform ist der Rauchmelder ein Ansaugrauchmelder, wobei der Ansaugrauchmelder eine als Strömungskanal für angesaugte Umgebungsluft ausgebildete Messkammer aufweist. Typischerweise ist an einem solchen Ansaugrauchmelder, auch als ASD (für Aspirated Smoke Detector) bezeichnet, eine Rohrleitung oder ein Rohrsystem mit einer Vielzahl längs der Rohleitung verteilt angeordneten Ansauglöchern angeschlossen, um zumindest einen Teil der Raumluft aus zu überwachenden Räumen anzusaugen. Ansaugrauchmelder mit einem daran anschliessbaren Rohrsystem zur Überwachung der angesaugten Luft aus überwachungsbedürftigen Räumen und Einrichtungen

Schliesslich kann der Rauchmelder als Punktmelder ausgebildet sein, wobei das Gehäuse zumindest eine Raucheintrittsöffnung aufweist und wobei im Gehäuse eine als Labyrinth ausgebildete Messkammer angeordnet ist.

Die Erfindung sowie vorteilhafte Ausführungen der vorliegenden Erfindung werden am Beispiel der nachfolgenden Figuren erläutert. Dabei zeigen:
- FIG 1: einen Längsschnitt durch ein Gehäuse 1 eines beispielhaften Ansaugrauchmelders 100 mit einer erfindungsgemässen optischen Empfangseinheit 10.
- FIG 2: einen Schnitt durch einen beispielhaften, als Punktmelder ausgebildeten optischen Rauchmelder 200 mit einer erfindungsgemässen optischen Empfangseinheit 10,
- FIG 3: eine perspektivische Ansicht einer beispielhaften optischen Empfangseinheit gemäss der Erfindung und
- FIG 4: einen Schnitt durch die erfindungsgemässe optische Empfangseinheit entlang der in FIG 3 eingetragenen Schnittlinie IV-IV.

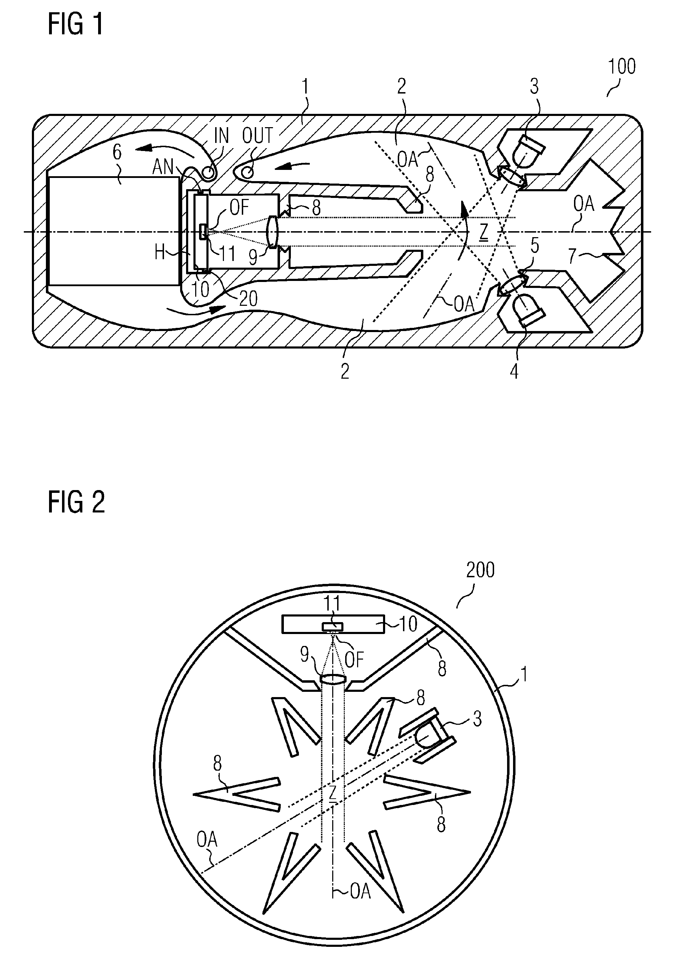

FIG 1 zeigt einen Längsschnitt durch ein Gehäuse 1 eines beispielhaften Ansaugrauchmelders 100 mit einer erfindungsgemässen optischen Empfangseinheit 10.

Der gezeigte optische Ansaugrauchmelder 100 arbeitet nach dem Streulichtprinzip. Er weist eine als Strömungskanal für angesaugte Umgebungsluft ausgebildete Messkammer 2, zwei LED 3, 4 als Lichtquellen und eine erfindungsgemässe optische Empfangseinheit 10 auf. Die Empfangseinheit 10 und die beiden LED 3, 4 sind auf ein gemeinsames optisches Streuzentrum Z in der Messkammer 2 ausgerichtet. Die optische Achse OA der Empfangseinheit 10 ist dabei um einen Winkel von 120° zur jeweiligen optischen Achse OA der beiden LED 3, 4 gedreht angeordnet. Der gezeigte Ansaugrauchmelder weist somit zwei Streulichtanordnungen mit zwei Vorwärtsstreuwinkeln von 120° auf. Im vorliegenden Beispiel senden die beiden LED 3, 4 abwechselnd Licht aus. Es sendet eine der beiden LED 3, 4 vorzugsweise Licht im Infrarotbereich, wie z.B. um 940 nm, und die andere LED 4, 3 vorzugsweise blaues Licht, wie z.B. um 470 nm, aus. Das jeweilige Licht wird an Partikeln, die sich im Streuzentrum Z befinden, gestreut. Ein Teil des jeweiligen gestreuten Lichts gelangt schliesslich zur optischen Empfangseinheit 10. Dort wird es detektiert und als Ausgangssignal zur Weiterverarbeitung ausgegeben. Auf Basis einer zeitlichen Auswertung für das "infrarote" und "blaue" Ausgangssignal ist dann eine Diskriminierung der detektierten Partikelgrösse und eine entsprechende Generierung z.B. eines Brandalarms oder einer Staub-/Dampfwarnung möglich.

Mit IN ist der Lufteintritt und mit OUT der Luftaustritt im Strömungskanal 2 bezeichnet. Mit dem Bezugzeichen 7 ist eine Lichtfalle, mit den Bezugszeichen 8 Blenden und mit 9 eine optische Linse zur Fokussierung des Streulichts auf einen Photosensor 11 in der erfindungsgemässen optischen Empfangseinheit bezeichnet. Mit OF ist ferner eine Durchgangsöffnung in der Empfangseinheit 10 bezeichnet, durch die das Streulicht zum Photosensor 11 gelangen kann.

Mit H ist schliesslich eine Halterung im Gehäuse 2 des Rauchmelders 100 für die optische Empfangseinheit 10 und mit AN ein dort beispielhaft ausgebildeter seitlicher Anschlag bezeichnet. Gegen diesen wird gemäss einer Ausführungsform der Erfindung die Empfangseinheit 10 nach dem Einschieben in die Halterung H durch ein seitlich an der Empfangseinheit 10 angeordnetes Federelement 20 in der gezeigten Blattebene von unten nach oben gedrückt. Die Empfangseinheit 10 liegt nun ausgerichtet formschlüssig an dem Anschlag AN.

FIG 2 zeigt einen Schnitt durch einen beispielhaften, als Punktmelder ausgebildeten optischen Rauchmelder 200 mit einer erfindungsgemässen optischen Empfangseinheit 10.

Mit dem Bezugszeichen 1 ist wiederum ein Gehäuse bezeichnet. Im Gehäuse 1 sind nicht weiter gezeigte Raucheintrittsöffnungen zum möglichen Eintritt von zu detektierendem Rauch in eine als Labyrinth ausgebildete Messkammer 2 bezeichnet. Es sind die Empfangseinheit 10 und beispielhaft nur eine einzige LED 3 als Lichtquelle, wie z.B. eine Infrarot-LED, auf ein gemeinsames optisches Streuzentrum Z in der Messkammer 2 ausgerichtet. Die optische Achse OA der Empfangseinheit 10 ist um einen Winkel von 60° zur optischen Achse OA der LED 3 gedreht angeordnet. Der gezeigte optische Rauchmelder weist somit eine einzige Streulichtanordnung mit einem Rückwärtsstreuwinkel von 60° auf. Analog zur vorherigen FIG 1 wird auch hier Streulicht über geeignet angeordnete Blenden 8 und eine optische Linse 9 in Richtung der erfindungsgemässen optischen Empfangseinheit 10 fokussiert und dort detektiert.

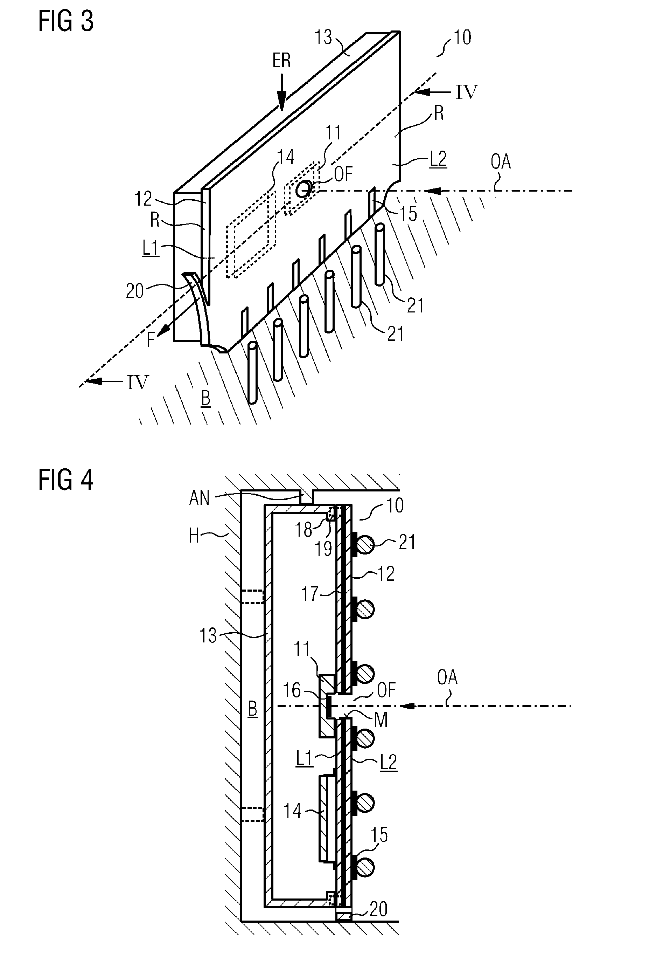

FIG 3 zeigt eine perspektivische Ansicht einer beispielhaften optischen Empfangseinheit 10 gemäss der Erfindung. Die Empfangseinheit 10 weist einen als Leiterplatte ausgeführten Schaltungsträger 12 auf. Mit L1 ist eine Bestückungsseite und mit L2 eine gegenüberliegende Schaltungsträgerseite L2 bezeichnet. Die Leiterplatte 12 weist ferner eine in dieser Darstellung nicht sichtbare, nahezu vollständige Abschirmlage auf, die zum Schutz gegen elektromagnetische Einstrahlung vorgesehen ist (siehe hierzu FIG 4 im Detail). Die Abschirmlage ist im vorliegenden Beispiel die mittlere Kupferlage einer Dreilagenleiterplatte.

Auf der Bestückungsseite L1 sind zentral ein Photosensor 11 und benachbart dazu ein Verstärker 14 angeordnet, der ein vom Photosensor 11 ausgegebenes Sensorsignal verstärkt. Weiterhin umschliesst eine Abschirmeinrichtung 13 die Bestückungsseite L1 des Schaltungsträgers 12 mit den dortigen Bauelementen 11, 14. Die Abschirmeinrichtung 13 ist im vorliegenden Beispiel eine geschlossene Blechhaube, die gleichfalls zum Schutz gegen elektromagnetische Einstrahlung vorgesehen ist.

Ferner sind elektrische Anschlüsse 15 für die Stromversorgung der Empfangseinheit 10 sowie zur Ausgabe eines mit dem verstärkten Sensorsignal korrespondierenden Ausgangssignals im gezeigten unteren Bereich der Leiterplatte 12 auf der Schaltungsträgerseite L2 angeordnet. Die elektrischen Anschlüsse 15 selbst sind als Kontaktierungsflächen ausgebildet. Nach dem Einschieben der erfindungsgemässen Empfangseinheit 10 in Einschubrichtung ER und in eine nicht weiter dargestellte Halterung können dann die Kontaktierungsflächen 15 der Empfangseinheit 10 mit nun anliegenden Kontaktstifte 21 verlötet werden. Die Kontaktstifte 21 sind z.B. auf einer Hauptplatine eines optischen Rauchmelders angeordnet. Sie können auch, wie in der vorliegenden FIG 3 gezeigt, elektrisch isoliert durch einen Boden B eines Gehäuseteils des optischen Rauchmelders hindurchgeführt sein.

Erfindungsgemäss ist im Schaltungsträger 12 eine Durchgangsöffnung OF für zu detektierendes Licht vorhanden. Der Photosensor 11 ist dabei derart auf der Bestückungsseite L1 angeordnet, dass dessen photosensitive Schicht (siehe FIG 4) auf das zu detektierende Licht ausgerichtet ist. Mit OA ist die zugehörige optische Achse dieser Ausrichtung bezeichnet.

Der Schaltungsträger 12 weist gemäss der Erfindung zudem zwei seitliche, sich gegenüberliegende Aussenränder R auf. Diese befinden sich an zwei Stirnseiten der im Wesentlichen rechteckig ausgestalteten Leiterplatte 12. Es ist an nur einem der beiden Aussenränder R - hier im linken Teil der FIG 3 - ein Federelement 20 vorhanden, welches zur möglichen Aufbringung einer seitlich wirkenden Federkraft F vorgesehen ist. Dadurch ist eine selbsttätige Ausrichtung der optischen Empfangseinheit 10 an eine Innenseite der zuvor genannten Halterung möglich. Dies ist in der nachfolgenden FIG 4 im Detail gezeigt.

FIG 4 zeigt einen Schnitt durch die erfindungsgemässe optische Empfangseinheit 10 entlang der in FIG 3 eingetragenen Schnittlinie IV-IV.

In dieser Darstellung ist nun das Felderelement 20 erkennbar, welches nach dem Einschieben der Empfangseinheit 10 in die Halterung H diese unter Aufbringung einer Vorspannung nach oben und somit quer zu Einschubrichtung ER gegen einen dortigen Anschlag AN der Halterung H verschiebt. Das Federelement 20 ist dabei bereits als Teil des Schaltungsträgers 12 selbst ausgebildet. Dies kann z.B. durch entsprechendes Ausfräsen erfolgen, sodass ein freistehender Leiterplattenbügel mit federnden Eigenschaften verbleibt.

Eine exakte Begrenzung des Einschiebevorgangs in Einschubrichtung ER wird durch einen vorzugsweise plan ausgestalteten Boden B der Halterung H erreicht, gegen den die Unterkante der in FIG 3 gezeigten optischen Empfangseinheit 10 anschlägt. Schliesslich kann die Halterung H noch weitere, im Beispiel der FIG 4 zwei weitere gestrichelt angedeutete, nicht weiter bezeichnete Anschläge aufweisen. Dadurch ist eine weitere seitliche Begrenzung der Empfangseinheit 10 jeweils quer, insbesondere orthogonal zum ersten Anschlag AN und zum Boden B möglich. Somit ist die gesamte Empfangseinheit 10 in allen drei orthogonalen Raumrichtungen für eine vorteilhaft exakte Montage und Ausrichtung fixiert.

Dadurch kann zum einen die Reihe der Kontaktierungsflächen 15 vorteilhaft an die Reihe der Kontaktstifte 21 ausgerichtet werden. Zum anderen kann die gesamte Empfangseinheit 10 durch den definierten Anschlag AN vorteilhaft reproduzierbar exakt auf das Streuzentrum Z ausgerichtet werden.

Im Beispiel der FIG 4 ist die Durchgangsöffnung OF eine kreisrunde Bohrung. Sie ist zugleich auch eine optische Blende, welche nur das vom Streuzentrum Z eintreffende Licht in Richtung zum Photosensor 11 passieren lässt. Dabei ist der Querschnitt der Durchgangsöffnung OF in Form und Abmessung auf den Querschnitt der photosensitiven Schicht 16 des Photosensors 11 abgestimmt. Die photosensitive Schicht 16 ist typischerweise gleichfalls kreisförmig. Der gezeigte Photosensor 11 ist beispielhaft eine Photodiode. Er weist ein Flip-Chip-Gehäuse, insbesondere ein sogenanntes Reverse-Gullwing-Gehäuse für eine direkte Oberflächenmontage auf dem Schaltungsträger 12 auf.

Zusammen mit der zuvor beschriebenen exakt möglichen Ausrichtung der optischen Empfangseinheit 10 in der Halterung H fluchtet dann die Flächennormale im Zentrum bzw. im geometrischem Mittelpunkt der photosensitiven Schicht 16 mit der konstruktiven optischen Empfangsachse OA eines optischen Rauchmelders, wie z.B. in FIG 1 und FIG 2 gezeigt, für die erfindungsgemässe Empfangseinheit 10 vorgesehen ist.

Die Innenseite der Durchgangsöffnung OF weist eine elektrisch leitende Schicht M auf. Diese Schicht M ist insbesondere eine Metallschicht, d.h. die zylindrische Innenseite der Durchgangsöffnung OF ist metallisiert. Diese Metallschicht M ist zudem mit der im Inneren der Leiterplatte 12 liegenden Abschirmlage 17 elektrisch leitend verbunden. Darüber hinaus ist auch die Abschirmeinrichtung 13 elektrisch leitend mit der Abschirmlage 17 verbunden, so dass bis auf die photosensitive Schicht 16 selbst der gesamte Schaltungsträger 12 inklusive der Bauelemente 11, 14 vollständig von einem Faraday'schen Käfig umgeben sind.

Im Beispiel der FIG 4 ist weiterhin die Abschirmeinrichtung 13 als Halbschale zum elektrisch kontaktierenden Aufschnappen auf entsprechende Gegenkontakte 19 auf der Bestückungsseite L1 des Schaltungsträgers 12 ausgebildet. Die Halbschale kann alternativ oder zusätzlich auch eine umlaufende Umbiegung 18 aufweisen. Die Gegenkontakte 19 können als Rahmen ausgestaltet sein, welcher in Oberflächenmontage auf der Bestückungsseite L1 aufgelötet ist. Vorzugsweise ist dieser Rahmen umlaufend über eine Vielzahl von Durchkontaktierungen mit der Abschirmlage 17 elektrisch verbunden.

### Bezugszeichenliste

- 1: Gehäuse
- 2: Messkammer, Strömungskanal
- 3, 4: Leuchtmittel, LED
- 5, 9: optische Linse
- 6: Filter
- 7: Lichtfalle
- 8: Blende
- 10: optische Empfangseinheit
- 11: Photosensor, Photodiode, Photodiode in Reverse-Gullwing-Bauweise
- 12: Schaltungsträger, Leiterplatte
- 13: Abschirmeinrichtung, Abschirmblech
- 14: Verstärker
- 15: Anschlusskontakte
- 16: photosensitive Schicht
- 17: Abschirmlage, Masselage, innenliegender Layer
- 18: umlaufende Umbiegung
- 19: Gegenkontakt, Durchkontaktierung
- 20: Federelement, Biegefeder
- 21: Pins, Kontaktstifte
- 100: Ansaugrauchmelder, ASD, Rauchmelder
- 200: Punktmelder, Rauchmelder
- AN: Anschlag
- B: Boden der Halterung
- ER: Einschubrichtung
- F: Federkraft, Ausrichtkraft
- H: Halterung
- IN: Lufteinlass
- L1: Bestückungslage, Aussenlage des Schaltungsträgers
- L2: Schaltungsträgerlage, Aussenlage
- M: Metalllage, Metallisierung
- OA: optische Achse
- OF: Durchgangsöffnung, Ausnehmung
- OUT: Luftauslass
- R: Aussenrand des Schaltungsträgers
- Z: optisches Streuzentrum

## Patentansprüche

1. Optische Empfangseinheit, insbesondere für einen nach dem Streulichtprinzip arbeitenden optischen Rauchmelder (100, 200), wobei die optische Empfangseinheit aufweist
- einen Schaltungsträger (12) mit einer Bestückungsseite (L1) und einer gegenüberliegenden Schaltungsträgerseite (L2), sowie mit einer nahezu vollständigen Abschirmlage (17),
- einen auf der Bestückungsseite (L1) des Schaltungsträgers (12) angeordneten Photosensor (11) sowie einen Verstärker (14) zum Verstärken eines vom Photosensor (11) ausgegebenen Sensorsignals und gegebenenfalls weitere Bauelemente,
- eine Abschirmeinrichtung (13), welche die Bestückungsseite (L1) des Schaltungsträgers (12) mit den Bauelementen (11, 14) gegen elektromagnetische Einstrahlung einschliesst, und
- elektrische Anschlüsse (15) für die Stromversorgung der Empfangseinheit sowie zur Ausgabe eines mit dem verstärkten Sensorsignal korrespondierenden Ausgangssignals,
**dadurch gekennzeichnet,**
- **dass** im Schaltungsträger (12) eine Durchgangsöffnung (OF) für zu detektierendes Licht vorhanden ist und
- **dass** der Photosensor (11) derart auf der Bestückungsseite (L1) angeordnet ist, dass dessen photosensitive Schicht (16) auf das zu detektierende Licht ausgerichtet ist.

2. Optische Empfangseinheit nach Anspruch 1, wobei die Innenseite der Durchgangsöffnung (OF) eine elektrisch leitende Schicht (M) aufweist, insbesondere metallisiert ist.

3. Optische Empfangseinheit nach Anspruch 1 oder 2, wobei der Querschnitt der Durchgangsöffnung (OF) in Form und Abmessung auf den Querschnitt der photosensitiven Schicht (16) abgestimmt ist.

4. Optische Empfangseinheit nach Anspruch 3, wobei die Durchgangsöffnung (OF) zugleich eine optische Blende ist.

5. Optische Empfangseinheit nach einem der vorherigen Ansprüche, wobei der Photosensor (11) ein Flip-Chip-Gehäuse aufweist.

6. Optische Empfangseinheit nach einem der vorherigen Ansprüche, wobei der Photosensor (11) ein Reverse-Gullwing-Gehäuse für eine direkte Oberflächenmontage auf dem Schaltungsträger (12) aufweist.

7. Optische Empfangseinheit nach einem der vorherigen Ansprüche, wobei der Photosensor (11) und der Verstärker (14) als eine Baueinheit ausgebildet sind und insbesondere ein gemeinsames Halbleiterbauelement bilden.

8. Optische Empfangseinheit nach einem der vorherigen Ansprüche, wobei die Abschirmeinrichtung (13) als Halbschale zum elektrisch kontaktierenden Aufschnappen auf entsprechende Gegenkontakte (19) auf der Bestückungsseite (L1) des Schaltungsträgers (12) ausgebildet ist.

9. Optische Empfangseinheit nach einem der vorherigen Ansprüche, wobei die elektrischen Anschlüsse (15) als Kontaktierungsflächen auf der Schaltungsträgerseite (L2) ausgebildet sind.

10. Optische Empfangseinheit nach einem der vorherigen Ansprüche, wobei der Schaltungsträger (12) zwei seitliche, sich gegenüberliegende Aussenränder (R) aufweist und wobei an einem der beiden Aussenränder (R) ein Federelement (20) zur möglichen Aufbringung einer seitlich wirkenden Federkraft (F) vorhanden ist.

11. Optische Empfangseinheit nach Anspruch 10, wobei das Federelement (20) als Teil des Schaltungsträgers (12) selbst ausgebildet ist.

12. Ein nach dem Streulichtprinzip arbeitender optischer Rauchmelder mit einem Gehäuse (1), mit einer Messkammer (2), mit zumindest einer Lichtquelle (3, 4) und einer optischen Empfangseinheit (10) nach einem der vorherigen Ansprüche.

13. Optischer Rauchmelder nach Anspruch 12, wobei die optische Empfangseinheit (10) und die zumindest eine Lichtquelle (3, 4) auf ein gemeinsames optisches Streuzentrum (Z) in der Messkammer (2) ausgerichtet sind und wobei die optische Achse (OA) der Empfangseinheit (10) jeweils um einen Winkel zur jeweiligen optischen Achse (OA) der zumindest einen Lichtquelle (3, 4) gedreht angeordnet ist.

14. Optischer Rauchmelder nach Anspruch 12 oder 13, wobei der Rauchmelder ein Ansaugrauchmelder (100) ist und wobei der Ansaugrauchmelder (100) eine als Strömungskanal für angesaugte Umgebungsluft ausgebildete Messkammer (2) aufweist.

15. Optischer Rauchmelder nach Anspruch 12 oder 13, wobei der Rauchmelder ein als Punktmelder ausgebildeter Rauchmelder (200) ist, wobei das Gehäuse (1) zumindest eine Raucheintrittsöffnung aufweist und wobei im Gehäuse (1) eine als Labyrinth ausgebildete Messkammer (2) angeordnet ist.
